(19) Europäisches Patentamt
European Patent Office
Office européen des brevets

(11) Publication number: **0 033 417**
**B1**

(12) **EUROPEAN PATENT SPECIFICATION**

(45) Date of publication of patent specification: **05.06.85**

(51) Int. Cl.[4]: **C 23 F 11/18**, C 23 F 11/16, C 23 F 11/12, C 09 K 5/00

(21) Application number: **80304433.8**

(22) Date of filing: **09.12.80**

(54) **Method of and composition for inhibiting corrosion.**

(30) Priority: **10.12.79 US 101658**

(43) Date of publication of application:
**12.08.81 Bulletin 81/32**

(45) Publication of the grant of the patent:
**05.06.85 Bulletin 85/23**

(84) Designated Contracting States:
**BE DE FR GB IT NL**

(56) References cited:
**DE-A-2 643 422**
**US-A-4 029 577**
**US-A-4 163 733**

**The file contains technical information submitted after the application was filed and not included in this specification**

(73) Proprietor: **BETZ EUROPE, INC.**
**4636 Somerton Road**
**Trevose Pennsylvania 19047 (US)**

(72) Inventor: **May, Roger Cletus**
**537 Fox Road**
**Glenside Pennsylvania 19038 (US)**
Inventor: **Geiger, Gary Edwin**
**4156 Whiting Road**
**Philadelphia State of Pennsylvania 19154 (US)**

(74) Representative: **McCall, John Douglas et al**
**W.P. THOMPSON & CO. Coopers Building**
**Church Street**
**Liverpool L1 3AB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 033 417 B1

**Description**

The treatment of industrial water systems, particularly cooling water systems, has over the past 25 years been subject to significant changes. The most prominently recognized treatment for cooling water systems came in the form of Betz Laboratories, Inc.'s Dianodic® and Zinc-Dianodic product lines. These lines made use of the exceptional capacity of the chromate component in inducing the formation of a passive oxide film, believed to be primarily gamma-ferric oxide, on the metallic surfaces which provided protection against corrosion. The chromates, when used in conjunction with polyphosphates, zinc and in some cases orthophosphates, provided protection which until recently was basically unduplicatable with other treatments. In this regard, U.S. Patents 2,711,391; 2,793,932, 2,848,299; 2,872,281; and 2,900,222 can be noted.

With the advent of Federal, State and Municipal environmental controls, however, chromate became suspect for its environmental impact on streams, ponds, lakes, etc., where it might be discharged. Some industries, particularly the petroleum refining, petrochemical, chemical and steel industries, because of each's awareness of the excellent passivation provided by the chromates through the formation of a passive oxide film, decided to continue to use the chromate treatments, with the attendent high capital expenditures for either chromate removal or recovery systems, or for disposing of reduced chromate obtained by the natural treatment of effluents. Other industries, on the contrary, have utilized treatments which avoided the use of chromates. Since chromates are superb corrosion inhibitors, systems such as cooling water systems, were maintained in the acid range, thereby avoiding the pH's where calcium carbonate and magnesium carbonate normally form and precipitate.

With the prohibitions relative to the use of chromate, treatment programs were utilized which made use of the controlled precipitation of calcium phosphate and/or carbonate to form a protective barrier on the surface of the metallic parts (generally ferrous metals) to provide corrosion protection through cathodic action. These programs utilized orthophosphates, polyphosphates, phosphonic acid compounds and their salts. Although these programs were reasonably successful, they did not provide the protection established by the passive oxide film induced by chromate treatments. Moreover, these programs, because of the need for narrow ranges of pH control, were virtually unforgiving, i.e., if concentration of the calcium ion, the phosphate and phosphonate were excessive for a particular pH, uncontrolled precipitation occurred, which on many occasions blocked the metal pipes which the programs were attempting to protect. Control of the operating parameters and conditions was extremely critical.

These treatments, although the best available at the time did provide reduced heat transfer because of the deposited materials, but also negatively effected production because they did impede flow, for example, of the cooling water. Each of these factors had a direct effect on energy costs, since more energy was required to provide commensurate production to that achieved when chromate was used.

The most widely used non-chromate treatments are based on polyphosphate. The treatment programs patented by Gaupp (U.S. Patent 3,992,318) and Hollingshad (U.S. Patent 3,941,562) represent these conventional phosphate-based corrosion control programs which prevent corrosion through the formation of an oxygen diffusion barrier film. Polyphosphates provide corrosion protection through an electrodeposition mechanism that results in a calcium phosphate film on the metal surface. (See Drew, Principles of Industrial Water Treatment, pages 62, 63). This film physically separates the metal surface from the aqueous medium and prevents dissolved oxygen from reaching the metal surface, thereby preventing corrosion. The conventional phosphate-based programs suffer from the fact that they derive their corrosion inhibiting properties from a barrier film (deposit). Excessive deposition on heat transfer equipment can dramatically reduce the efficiency of process equipment and can result in an accelerated under deposit corrosion which can cause catastrophic corrosion failures of process equipment. It is for this reason that conventional phosphate programs employ phosphonates and/or acrylate polymers. As demonstrated by Gaupp and Zecher (U.S. Patent 3,751,372) these materials generally improve the effectiveness of conventional phosphate treatments. Conventional phosphate programs utilize phosphonates and polyacrylic acids to control the rate of film formation (thickness) and uniformity of the film thickness. This is necessary to minimize both under deposit and pitting corrosion. However, the use of these materials does not affect the mechanism by which corrosion protection is established, i.e., through formation of a barrier film.

It is well known in the art that the conventional phosphate programs are inferior to chromate programs in their ability to inhibit corrosion. Additionally, chromate programs provide corrosion protection through the formation of a passive iron oxide and not a barrier film (deposit). Thus superior heat transfer efficiency is obtained with chromate programs.

Our EP—A—0017373 (which constitutes state of the art within the terms of Art. 54(3)EPC) relates to the application of acrylic acid/hydroxyalkylacrylate copolymers (AA/HAA) with zinc-containing treatments and discloses the use of combinations of zinc and orthophosphate as corrosion inhibitors. It concerns a method of improving the corrosion and deposition control capabilities of any zinc-containing treatment by using acrylic acid/hydroxyalkylacrylate copolymers. The improvement in performance is a direct result of the ability of the AA/HAA copolymers to inhibit the precipitation of insoluble zinc salts in the bulk water and prevent excessive deposition of these salts on metallic surfaces. With regard to zinc/phosphate treatments

the improvement in corrosion inhibition results from the inhibition of zinc phosphate precipitation in the bulk water, permitting effective levels of zinc and phosphate to remain soluble for corrosion protection.

The DE—A—26 43 422 is directed to a water treatment agent and its use for preventing the formation of corrosion, scale and contamination on the surface of the metal that is in contact with the water. The invention of this publication lies in a specific polymer containing a structural unit that is derived from a monomer having an ethylenically unsaturated bond and which has one or more carboxyl radicals, at least a part of said carboxyl radicals being modified. The polymer must contain the groupings represented by the formulas:

$$CO(OA)_aX \text{ or } \begin{matrix} —CO(OA)_a \diagdown \\ \quad\quad\quad\quad X^1 \\ —CO(OA)_a \diagup \end{matrix}$$

where OA is an oxyalkylene having 2 to 4 carbon atoms and X is an hydroxyl radical, an alkoxy radical having 1 to 4 carbon atoms or a monovalent phosphate radical, $X^1$ is a divalent phosphate radical, and a is a positive integer.

The polymer may be combined with a whole host of other conventional water treating agents including but not limited to polyphosphoric acids, phosphonic acids, orthophosphoric acid, polyvalent metal salts such as zinc and nickel salts, or organic phosphoric esters.

Additionally, the agents may be used in conjunction with chromates, bichromates, tungstates, molybdates, benzotriazole, mercaptobenzothiazole, etc. Also, other agents may be used such as lignin derivatives, tannic acids, starch, polyacrylic soda, polyacrylic amide, as well as metal ion sequestering agents such as ethylene diamine, diethylene triamine, nitrilo triacetic acid, EDTA, and diethylene triamine pentaacetic acid.

While the number of water treating agents which are reputedly utilizable with the polymer is broad, this breadth is nowhere near the breadth of the polymers which are stated to be operable in accordance with the specification. According to the patent publication, the polymers may be produced from:

1. acrylic acid.
2. methacrylic acid
3. maleic acid
4. fumaric acid
5. itaconic acid
6. crotonic acid
7. cinnamic acid
8. vinyl benzoic acid

The polymers may be homopolymers, copolymers, or terpolymers. As a matter of interest the polymers specifically disclosed for the most part are terpolymers composed of optional units such as esters of (meth)acrylic acid such as methyl(meth)acrylate, ethyl(meth)acrylate, butyl(meth)acrylate, 2-ethyl hexyl(meth)acrylate, dimethyl amino(meth)acrylate, diethyl amino ethyl(meth)acrylate, etc.; styrene compounds such as styrene, methyl styrene etc.; fatty acid esters of vinyl alcohols, etc.; etc.

As is apparent, the breadth and scope of the DE—A—26 43 422 is very extensive.

Construing the patent publication from the specific examples of the various Tables, one can conclude that the major thrust of the invention is as an improvement over conventional phosphate, phosphonate, and zinc treatments. This is apparent from the various examples of the specification, since Tables 1 and 2 deal with the ability of the specific polymers disclosed to control calcium carbonate, while Tables 4, 5 and 6 deal with the ability of the specific copolymers to provide corrosion protection while reducing the scale rate when the copolymers are utilized in conjunction with polyphosphates, zinc salts or phosphonates. In each test of each Example it should be noted that the scaling rate was well above acceptable limitations.

Typical of the chromate-free treatments are those specified in Carter and Vogt U.S. Patent 3,837,803. One of the objects of this invention is to improve upon the invention of the above-identified patent.

Until the advent of the present invention the use of the passivated oxide film for corrosion protection has, with the exception of those systems using chromate, been limited since no practical and effective manner has been discovered to provide such in the absence of chromate.

Inorganic phosphates, although having the capacity, could not be used effectively. The present inventors, after much investigation, have discovered a treatment(s) which has successfully established the much desired but elusive passive oxide film (also believed to be a gamma ferric oxide film) on ferrous-based metallic surfaces in contact with aqueous systems, and in particular cooling water systems.

The present inventors discovered that if the aqueous medium contained in or being conveyed by a metallic system was first adjusted to a pH of 5.5 or above, and secondly measured to assure a particular calcium ion content, that the elusive passive oxide film is formed upon the metallic surfaces to thereby protect such from corrosion through the use of a treatment comprising a water-soluble orthophosphate together with a water-soluble polymer composed primarily of units derived from acrylic acid (or its water-soluble salts) and units derived from an hydroxy lower alkyl acrylate. Additional protection is

obtained by including in the treatment water-soluble polyphosphates and/or water-soluble organophosphonic acid derivatives (or salts thereof). The organophosphonic acid derivatives contemplated for use in accordance with the present invention are those disclosed in columns 5 through 9 of U.S. 3,837,803 and exemplified later below. The polyphosphates operable are those generally used for corrosion inhibition purposes and which will be described more fully later herein.

While the treatments of the invention are effective alone, it is desirable where copper corrosion is a problem to include copper corrosion inhibitors such as benzotriazole, mercaptobenzothiazole, mercaptobenzothiol, tolyltriazole or benzothiazole compounds, in the composition or in the treatment.

According to the present invention therefore, there is provided a composition for providing a protective passive oxide film on the surface of a ferrous metallic part in contact with an aqueous solution with little or no attendant deposition of scale on said part, which comprises

(a) a water-soluble polymer comprising units derived from an acrylic acid or water-soluble salt thereof and units of an hydroxylated lower alkyl acrylate, wherein the units of the polymer have the following formulae:

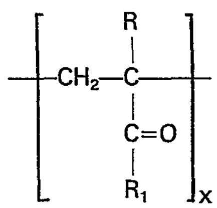

and

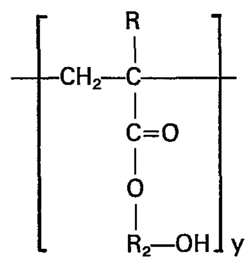

wherein R is hydrogen or a lower alkyl of from 1 to 3 carbon atoms; $R_1$ is OH, OM or $NH_2$ where M is a water-soluble cation; $R_2$ is a lower alkylene of from 2 to 6 carbon atoms and the mole ratio of x:y is 36:1 to 1:4; and

(b) a water-soluble orthophosphate compound, the ratio on a weight basis of the polymer to the orthophosphate expressed as $PO_4\equiv$ being from 1:8 to 4:1, the composition being zinc-free.

The invention also includes a method of inhibiting the corrosion of ferrous metal parts in contact with a zinc-free aqueous solution with little or no attendant deposition of scale on said ferrous parts, which corrosion inhibition is obtained by providing for the formation of a protective passive oxide film on the metal surface in contact with said aqueous medium, which method comprises

(i) assuring that the pH of said aqueous medium is 5.5 or above;
(ii) assuring that in the aqueous medium the concentration of calcium or other ions selected from nickel and chromium and mixtures thereof is of at least 15 parts per million parts of water; and
(iii) adding to said aqueous medium a composition according to the invention or the components of said composition in stepwise addition in an amount or amounts sufficient to provide a substantially scale free protective passive oxide film on the metallic surface.

The water-soluble orthophosphate compounds which are operable for the present purposes generally include phosphoric acid, the sodium orthophosphates, the potassium orthophosphates, the lithium orthophosphates and ammonium orthophosphates. The following specific compounds may be mentioned as exemplary:

| | |
|---|---|
| $H_3PO_4$ | phosphoric acid |
| $LiH_2PO_4$ | lithium di acid phosphate |
| $Na_3PO_4$ | trisodium orthophosphate |
| $Na_2HPO_4$ | disodium orthophosphate |
| $NaH_2PO_4$ | monosodium orthophosphate |
| $NaH_3(PO_4)_2$ | hemisodium orthophosphate |
| $K_3PO_4$ | tripotassium orthophosphate |
| $K_2HPO_4$ | dipotassium orthophosphate |
| $KH_2PO_4$ | monopotassium orthophosphate |

| | |
|---|---|
| $(NH_4)_3PO_4$ | triammonium orthophosphate |
| $(NH_4)_2HPO_4$ | diammonium orthophosphate |
| $(NH_4)H_2PO_4$ | monoammonium orthophosphate |

In addition to the inorganic orthophosphates set forth above may be mentioned the organic orthophosphates which possess the basic formula:

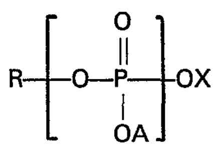

where R is an alkyl radical having 1 to 25 carbon atoms, X is A or R, and A is H, Ha, Li, K or $NH_4$. Compounds of the above nature are an excellent source of orthophosphate.

The polymers effective for the purpose of the present invention contain units derived from an acrylic acid compound (AA), i.e.,

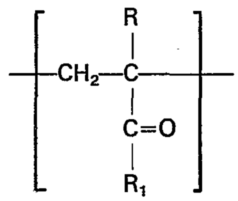

where R is hydrogen or a lower alkyl of from 1 to 3 carbon atoms and $R_1$=OH, $NH_2$ or OM, where M is a water-soluble cation, e.g., $NH_4$ or alkali metal (K, Na), and units of an hydroxylated lower alkyl ($C_2$—$C_6$) acrylate (HAA) as represented by the formula:

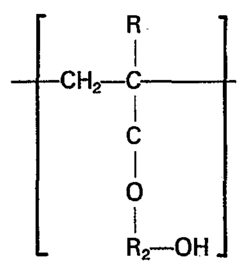

where R is H or lower alkyl of from 1 to 3 carbon atoms, and $R_2$ is a lower alkylene having from 2 to 6 carbon atoms.

In terms of mole ratios, the polymers are considered, most broadly, to have a mole ratio of AA:HAA of from 1:4 to 36:1. This mole ratio is preferably 1:1 to 11:1, and most preferably 1:1 to 5:1. The only criteria that is considered to be of importance with respect to mole ratios is that it is desirable to have a copolymer which is water-soluble. As the proportion of hydroxylated alkyl acrylate units increases, the solubility of the copolymer decreases. It is noted that, from an efficacy point of view, the polymers having a mole ratio of AA:HAA of 1:1 to 5:1 were considered the best.

The polymers could have a molecular weight of from 1,000 to 50,000, with from 2,000 to 6,000 being preferred.

A preferred polymer is one in which the hydroxy alkyl acrylate is hydroxyl propyl acrylate. It is also preferred that in such a polymer the ratio of the acrylic acid units to the hydroxyl propyl acrylate units is 3:1 and the polymer has a molecular weight of 6,000.

The polymers utilized in accordance with the invention are described together with their methods of manufacture in U.S. Patent 4,029,577. This patent is directed in particular to the reduction of scale formation on metal surfaces in contact with cooling water.

The polymer prepared either by copolymerization of AA with hydroxy propyl acrylate (HPA) or reaction of AA with propylene oxide would be composed of units having the structural formulas:

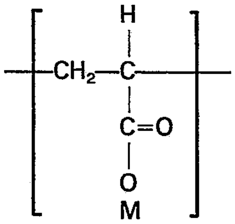

and

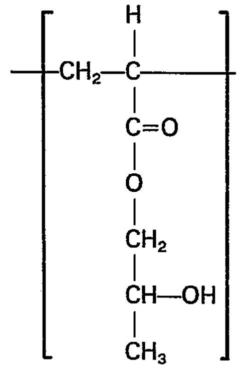

where M is as earlier defined.

The water-soluble polyphosphate compounds which are operable for the present purposes generally include the sodium polyphosphates, the potassium polyphosphates, the lithium polyphosphates and ammonium polyphosphates. The following specific compounds may be mentioned as exemplary:

| | |
|---|---|
| $Na_5P_3O_{10}$ | sodium tripolyphosphate |
| $Na_4P_2O_7$ | tetrasodium pyrophosphate |
| $Na_2H_2P_2O_7$ | disodium pyrophosphate |
| $(NaPO_3)_6$ | sodium hexametaphosphate |
| $K_4P_2O_7$ | tetrapotassium pyrophosphate |
| $Na_2(NH_4)_2P_2O_7$ | sodium ammonium pyrophosphate |
| $Na_4HP_3O_{10} \cdot 1.5H_2O$ | sodium acid tripolyphosphate |
| $K_5P_3O_{10}$ | potassium tripolyphosphate |
| $Na_6P_4O_{13}$ | sodium tetrapolyphosphate |
| $Na_3P_3O_9$ | sodium trimetaphosphate |
| $Na_4P_4O_{12}$ | sodium tetrametaphosphate |
| $(NaPO_3)_7$ | sodium heptametaphosphate |
| $(NaPO_3)_8$ | sodium octametaphosphate |

Basically any polyphosphate which is known to inhibit corrosion in aqueous systems may be utilized.

The organo-phosphonic acid compounds are those having a carbon to phosphorous bond, i.e.,

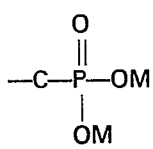

Compounds within the scope of the above description generally are included in one of perhaps 3 categories which are respectively expressed by the following general formulas:

(1)

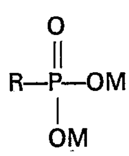

where R is a lower alkyl having from one to six carbon atoms, e.g., methyl, ethyl, butyl, propyl, isopropyl, pentyl, isopentyl and hexyl; substituted lower alkyl of from one to six carbon atoms, e.g., hydroxyl and

amino-substituted alkyls; a mononuclear aromatic (aryl) radical, e.g. phenyl or benzene, or a substituted mononuclear aromatic compound, e.g., hydroxyl, amino, lower alkyl substituted aromatic, e.g., benzyl phosphonic acid; and M is a water-soluble cation, e.g., sodium, potassium, ammonium, lithium, etc. or hydrogen.

Specific examples of compounds which are encompassed by this formula include:

methylphosphonic acid

$CH_3PO_3H_2$

ethylphosphonic acid

$CH_3CH_2PO_3H_2$

2-hydroxyethylphosphonic acid

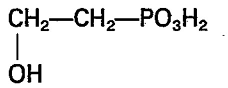

2-amino-ethylphosphonic acid

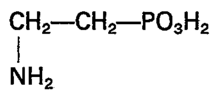

isopropylphosphonic acid

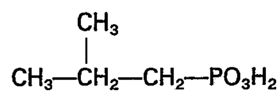

benzene phosphonic acid

$C_6H_5—PO_3H_2$

benzylphosphonic acid

$C_6H_5CH_2PO_3H_2$

(2) 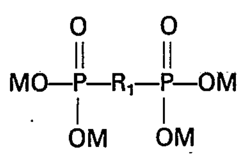

where $R_1$ is an alkylene having from one to 12 carbon atoms or a substituted alkylene having from 1 to 12 carbon atoms, e.g., hydroxyl or amino substituted alkylenes, and M is as earlier defined for (1) above.

Specific exemplary compounds and their respective formulas which are encompassed by the above formula are as follows:

methylene diphosphonic acid

$H_2O_3P—CH_2—PO_3H_2$

ethylidene diphosphonic acid

$H_2O_3P—CH(CH_3)PO_3H_2$

isopropylidene diphosphonic acid

$(CH_3)_2C(PO_3H_2)_2$

1-hydroxy, ethylidene diphosphonic acid (HEDP)

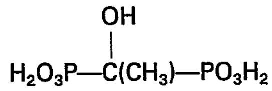

hexamethylene diphosphonic acid

$H_2O_3P—CH_2(CH_2)_4CH_2—PO_3H_2$

trimethylene diphosphonic acid

$H_2O_3P—(CH_2)_3—PO_3H_2$

decamethylene diphosphonic acid

$H_2O_3P—(CH_2)_{10}—PO_3H_2$

1-hydroxy, propylidene diphosphonic acid

$H_2O_3PC(OH)CH_2(CH_3)PO_3H_2$

1,6-dihydroxy, 1,6-dimethyl, hexamethylene diphosphonic acid

$H_2O_3PC(CH_3)(OH)(CH_2)C(CH_3)(OH)PO_3H_2$

dihydroxy, diethyl ethylene diphosphonic acid

$H_2O_3PC(OH)(C_2H_5)C(OH)(C_2H_5)PO_3H_2$

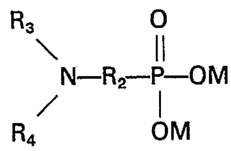

where $R_2$ is a lower alkylene having from one to four carbon atoms, or an amine or hydroxy substituted lower alkylene; $R_3$ is $[R_2—PO_3M_2]$, H, OH, amino, substituted amino, an alkyl having from one to six carbon atoms, a substituted alkyl of from one to six carbon atoms (e.g., OH, $NH_2$ substituted), a mononuclear aromatic radical and a substituted mononuclear aromatic radical (e.g., OH, $NH_2$ substituted); $R_4$ is $R_3$ or the group represented by the formula

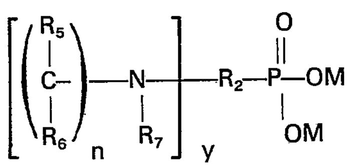

where $R_5$ and $R_6$ are each hydrogen, lower alkyl of from one to six carbon atoms, a substituted lower alkyl (e.g., OH, $NH_2$ substituted), hydrogen, hydroxyl, amino group, substituted amino group, a mononuclear aromatic radical, and a substituted mononuclear aromatic radical (e.g., OH and amine substituted); R is $R_5$, $R_6$, or the group $R_2—PO_3M_2$ ($R_2$ is as defined above); n is a number of from 1 through about 15; y is a number of from 1 to 14; and M is as earlier defined.

Compounds or formulas therefore which can be considered exemplary for the above formulas are as follows:

nitrilo-tri(methylene phosphonic acid)

$N(CH_2PO_3H_2)_3$

imino-di(methylene phosphonic acid)

$NH(CH_2PO_3H_2)_2$

n-butyl-amino-di(methyl phosphonic acid)

$C_4H_9N(CH_2PO_3H_2)_2$

decyl-amino-di(methyl phosphonic acid)

$C_{10}H_{21}N(CH_2PO_3H_2)_2$

trisodium-pentadecyl-amino-di-methyl phosphonate

$C_{15}H_{31}N(CH_2PO_3HNa)(CH_2PO_3Na_2)$

n-butyl-amino-di(ethyl phosphonic acid)

$C_4H_9N(CH_2CH_2PO_3H_2)_2$

tetrasodium-n-butyl-amino-di(methyl phosphonate)

$C_4H_9N(CH_2PO_3Na_2)_2$

triammonium tetradecyl-amino-di(methyl phosphonate)

$C_{14}H_{29}N(CH_2PO_3(NH_4)_2)CH_2PO_3HNH_4$

phenyl-amino-di(methyl phosphonic acid)

$C_6H_5N(CH_2PO_3H_2)_2$

4 hydroxy-phenyl-amino-di(methyl phosphonic acid)

$HOC_6H_4N(CH_2PO_3H_2)_2$

phenyl propyl amino-di(methyl phosphonic acid)

$C_6H_5(CH_2)_3N(CH_2PO_3H_2)_2$

tetrasodium phenyl ethyl amino-di(methyl phosphonic acid)

$C_6H_5(CH_2)_2N(CH_2PO_3Na_2)_2$

ethylene diamine tetra(methyl phosphonic acid)

$(H_2O_3PCH_2)_2N(CH_2)_2N(CH_2PO_3H_2)_2$

trimethylene diamine tetra(methyl phosphonic acid)

$(H_2O_3PCH_2)_2N(CH_2)_3N(CH_2PO_3H_2)_2$

hepta methylene diamine tetra(methyl phosphonic acid)

$(H_2O_3PCH_2)_2N(CH_2)_7N(CH_2PO_3H_2)_2$

decamethylene diamine tetra(methyl phosphonic acid)

$(H_2O_3PCH_2)_2N(CH_2)_{10}N(CH_2PO_3H_2)_2$

tetra decamethylene diamine tetra(methyl phosphonic acid)

$(H_2O_3PCH_2)_2N(CH_2)_{14}N(CH_2PO_3H_2)_2$

ethylene diamine tri(methyl phosphonic acid)

$(H_2O_3PCH_2)_2N(CH_2)_2NHCH_2PO_3H_2$

ethylene diamine di(methyl phosphonic acid)

$H_2O_3PCH_2NH(CH_2)_2NHCH_2PO_3H_2$

n-hexyl amine di(methyl phosphonic acid)

$C_6H_{13}N(CH_2PO_3H_2)_2$

diethylene triamine penta(methyl phosphonic acid)

$(H_2O_3PCH_2)_2N(CH_2)_2N(CH_2PO_3H_2)(CH_2)_2N(CH_2PO_3H_2)_2$

ethanol amine di(methyl phosphonic acid)

$HO(CH_2)_2N(CH_2PO_3H_2)_2$

n-hexyl-amino(isopropylidene phosphonic acid)methylphosphonic acid

$C_6H_{13}N(C(CH_3)_2PO_3H_2)(CH_2PO_3H_2)$

trihydroxy methyl, methyl amino di(methyl phosphonic acid)

$(HOCH_2)_3CN(CH_2PO_3H_2)_2$

triethylene tetra amine hexa(methyl phosphonic acid)

$(H_2O_3PCH_2)_2N(CH_2PO_3H_2)(CH_2)_2N(CH_2PO_3H_2)(CH_2)_2N(CH_2PO_3H_2)_2$

monoethanol, diethylene triamine tri(methyl phosphonic acid)

$HOCH_2CH_2N(CH_2PO_3H_2)(CH_2)_2NH(CH_2)_2N(CH_2PO_3H_2)_2$

chloroethylene amine di(methyl phosphonic acid)

$ClCH_2CH_2N(CH_2PO(OH)_2)_2$

For additional corrosion protection salts of nickel, cobalt, chromium or cadmium, such as for example the chlorides, chlorates, bromides, bromates, borates, nitrates, sulfates, acetates, benzoates, butyrates, carbonates, citrates or caproates may be included in the treatment so long as the salt is water-soluble to an acceptable degree.

In special instances certain waters to be treated will need pH adjustment to ensure that the system is above 5.5. In these cases, alkalis such as sodium hydroxide, sodium carbonate, potassium hydroxide or calcium hydroxide may be utilized.

In situations where it is known that acid or base addition is necessary for pH control, the acid or base may be included in the composition containing the orthophosphate compound.

Since compositions containing the polymer (AA/HAA) and the orthophosphate are not particularly stable when mixed as a highly active product for delivery to a user, it is desirable to treat the systems using what the industry considers a two-barrel approach, i.e., feed ingredients separately. Since the polyphosphates, the phosphonates, and the copper corrosion inhibitors, e.g., totylthiazole, mix quite well with the orthophosphate, these are included in one drum when utilized as the treatment. It is possible however, to blend all of the ingredients dry as powder or crystals and make the liquid from at the use sites. Stability is not a significant problem when the make is used within a short time.

Accordingly, the invention contemplates the use of a composition containing the polymer and the orthophosphate and optionally but preferably the phosphonate, the polyphosphate and the copper corrosion inhibitors. A preferred composition contains on a weight ratio basis of polymer to orthophosphate expressed as $PO_4\equiv$ of 1:6 to 2:1. When a polyphosphate (Betz Handbook of Industrial Water Conditioning, 6th Edition, 1962, pages 394—396, Betz Laboratories, Inc., Trevose, PA) is included, the weight ratio of orthophosphate to polyphosphate on a $PO_4\equiv$ to $PO_4\equiv$ basis is 15:1 to 1:3, and preferably 2.5:1 to 1:1. Similarly, if the organo-phosphate is included, the ratio of the orthophosphate to the phosphonate expressed as $PO_4\equiv$ to $PO_4\equiv$ is 1:2 to 13:1, and preferably 2:1 to 8:1. Any copper corrosion inhibitor may be included in the composition in an amount of 0.01 to 5% by weight of the composition which will be effective for controlling the copper corrosion in a given system by providing 0.05 to 10 parts per million parts of water in the system and preferably .5 to 5 parts per million.

In treating the aqueous systems the following dosages in parts per million parts of water in said aqueous systems of the respective ingredients are desirable, with the dosages of course being based upon the severity of the corrosion problem foreseen or experienced:

orthophosphate (expressed as $PO_4\equiv$): 2 to 50 parts per million parts of water (ppm) and preferably 6 to 30 ppm;

polymer: 0.3 to 120 ppm and preferably 3 to 25 ppm of water;
polyphosphate (expressed as $PO_4\equiv$): 0.1 to 30, and preferably 3 to 10, parts per million parts of water;
phosphonate (expressed as $PO_4\equiv$): 0.04 to 20, and preferably 1 to 6, parts per million parts of water.

The preferred rate of application of this treatment to cooling water systems and the ratios of various components depends on the calcium concentration of the cooling water. The treatment is preferably applied in waters having between 15 ppm and 1,000 ppm calcium. Within this range the weight ratio of calcium to orthophosphate is varied from 1:1 to 83.3:1, the weight ratio of AA/HAA to orthophosphate is varied from 1:3 to 1.5:1.

As earlier disclosed the orthophosphate which is critical to the present inventive treatment is generally obtained by direct addition. However, it is understood that the orthophosphate can also arise due to reversion of either inorganic polyphosphates or the organo-phosphones, or any other appropriate source or precursor thereof.

The above dosages represent the most desirable ranges since most systems will be treatable therewith. Higher dosages are permissible when the situation demands, but of course are more costly. The effectiveness of the inventive treatments are dependent upon the aqueous medium having a pH of 5.5 and above, and preferably 6.5 to 9.5, and containing calcium concentrations of 15 parts per million parts of water or above. Below this range, it may be necessary for overall effectiveness to add metallic ions such as zinc, nickel and chromium.

In order to illustrate the corrosion inhibiting properties of the present inventive treatments and compositions, tests were conducted utilizing a spinner testing technique. In accordance with this technique, dried, precleaned and pre-weighed coupons of a particular metal are suspended in a water bath, the water of which has a particular constituency, for a period of time. To the water in the bath is added the corrosion inhibiting treatment to be tested in certain dosages. After the coupons (usually six specimens for a realistic study) are circulated in this environment for a predetermined amount of time they are removed, cleaned, dried and weighed to determine weight loss. This weight loss for the specified period is utilized to compute corrosion rate for a year and is reported as a corrosion rate of mils per year (mpy) with equivalents in µm per year. The coupons are also inspected to assess the type corrosion occurring, i.e., local pitting, general corrosion, or both, and whether any deposition of scale, corrosion products, etc., has occurred.

Recorded below in Table I are the test results, the conditions of the testing, and any observations made at the end of testing as regards coupon appearance. As will be evident to the worker in this art, good corrosion inhibiting capacity with attendent deposition is of questionable value, because while corrosion may be abated, impedance of flow and lower heat transfer as regards cooling water systems have a drastic economical effect on the system.

TABLE I

Conditions:

| | | |
|---|---|---|
| pH | = | 7.0 |
| Temperature | = | 120°F (48.9°C) |
| Duration | = | 3 days |
| Aeration | = | constant |
| Feedwater hardness | = | 170 ppm $Ca^{+2}$ as $CaCO_3$<br>110 ppm Mg as $CaCO_3$<br>15 ppm $SiO_2$ |

Polymer No. 1: AA/HPA copolymer having a molecular weight of about 6,000; mole ratio of AA to HPA of 1.8:1.

Polymer No. 2: AA/HPA copolymer having a molecular weight of about 6,000; mole ratio of AA to HPA of 3:1.

PtLCS=Pretreated low carbon steel.

TABLE I, cont'd

| Treatment, in ppm active | | | Corrosion rate, in mpy (with equivalent in μm in brackets) | |
|---|---|---|---|---|
| Polymer No. 1 | Polymer No. 2 | O—$PO_4^{\equiv}$ | PtLCS | |
| | | 10 | 6.6 (167.6) | deposition prominent on coupon |
| | | 15 | 3.3 (83.8) | " |
| | | 25 | 3.1 (78.7) | " |
| 5 | | 5 | 2.0 (50.8) | |
| 5 | | 7.5 | 2.5 (63.5) | |
| 10 | | 10 | 0.3 (7.6) | |
| 5 | | 10 | 3.0 (76.2) | little deposition |
| 5 | | 15 | 3.2 (81.3) | " |
| 5 | | 20 | 2.7 (68.6) | |
| 5 | | 25 | 2.0 (50.8) | |
| | 5 | 5 | 6.5 (165.1) | little deposition |
| | 5 | 7.5 | 0.5 (12.7) | |
| | 10 | 10 | 2.0 (50.8) | |
| | 5 | 10 | 3.5 (88.9) | |
| | 5 | 20 | 2.7 (68.6) | |
| | 5 | 25 | 2.3 (58.4) | |

Additional testing was conducted to establish the enhanced activity of utilizing the polymer in conjunction with the combination of the phosphonic acid derivative and the orthophosphate, as referred to in Tables 4 and 5 of U.S. 3,837,803. The conditions of this comparative testing were exactly those as set forth in the patent, namely:

Test conditions

| | |
|---|---|
| Spinner System: | Volume 22 liters |
| Calcium ion concentration as $CaCO_3$: | 340 ppm |
| Magnesium ion concentration as $CaCO_3$: | 220 ppm |
| Chloride ion concentration: | 240 ppm |
| Sulfate ion concentration: | 210 ppm |
| Copper ion concentration: | 0.4 ppm |
| pH: | 8.0 |
| Temperature: | 120°F (48.9°C) |
| Flow rate: | 1.5 ft/sec (0.46 m/sec) |
| Duration of test: | Three (3) days |
| Aeration: | Constant |
| Test specimens: | High carbon steel AISI 1090 |

In describing the test conditions the patent makes the following disclosure as pertains to the test conditions:

"One point should be explained regarding the testing conditions. The corrosion rates set forth in the Tables are relatively high for practical purposes. However, this was purposely provided for by the selection of the constituency of the aqueous testing environment. The aqueous testing medium was produced so as to provide a very corrosive environment. It was felt that if the compositions and treatment techniques of the invention were as effective as claimed, that the enhanced activity would be pronounced and easily discernible. Basically, the theory followed is that if a corrosion inhibitor is to be considered effective under generally and conventionally found conditions, it must also exhibit this effectiveness under severe and drastic conditions which are also found in particular situations and particular regions of the country. Accordingly, the severe and drastic conditions were selected for the purpose of the present testing program".

TABLE II
Data taken from Table 4 of U.S. 3,837,803
Evaluation of Nitrilo-tri (methylene phosphonic acid) [referred to as AMP], and Trisodium phosphate [referred to as TSP]

| Treatment | Weight ratio AMP:TSP | Corrosion rate (mpy) (with equivalent in µm in brackets) | |
|---|---|---|---|
| Treatment level=20 ppm | | | |
| AMP | — | 38 | (965) |
| TSP | — | 32 | (813) |
| AMP+TSP | 1:2 | 23 | (584) |
| AMP+TSP | 1:1 | 14 | (356) |
| AMP+TSP | 2:1 | 21 | (533) |
| AMP+TSP | 5:1 | 28 | (711) |
| Treatments of U.S. 3,837,803 plus 20 ppm AA/HPA* | | | |
| AMP+TSP (at 20 ppm) | 1:2 | 10.8 | (274) |
| AMP+TSP | 1:1 | 7.5 | (190) |
| AMP+TSP | 2:1 | 8.8 | (224) |
| AMP+TSP | 5:1 | 11.2 | (284) |

*3AA:1HPA; molecular weight about 6,000

TABLE III
Data taken from Table 5 of U.S. 3,837,803

| Treatment | Weight ratio AMP:TSP | Corrosion rate (mpy) (with equivalent in µm in brackets) | |
|---|---|---|---|
| Treatment Level=40 ppm | | | |
| AMP | — | 8.0 | (203) |
| TSP | — | 16 | (406) |
| AMP+TSP | 1:2 | 6 | (152) |
| AMP+TSP | 2:1 | 4 | (102) |
| AMP+TSP | 5:1 | 5.0 | (127) |
| Treatment plus 20 ppm AA/HPA* | | | |
| AMP+TSP | 1:2 | 3.5 | (88.9) |
| AMP+TSP | 2:1 | 4.0 | (102) |
| AMP+TSP | 5:1 | 4.5 | (114) |
| Treatment: 40 ppm AA/HPA* alone | | 69.5 | (1765) |

*3AA:1HPA; molecular weight about 6,000

It is clear from the above that the addition of the polymer of the present invention provided enhanced corrosion inhibition in most cases when used in conjunction with the combination of U.S. 3,837,803.

Additional Spinner tests were conducted to establish the benefits derived by using the polymer in conjunction with a combination of orthophosphate, polyphosphate and a phosphonic acid derivative. Tolyltriazole, TTA, was also included for its copper corrosion inhibition properties.

The results and conditions of the test are recorded in the following Table IV.

TABLE IV (pH=7—7.5)

| Test No. | $Ca^{++}$ as $CaCO_3$ | $Mg^{++}$ as $CaCO_3$ | $Cl^-$ | $SO_4$= | $PO_4$≡ as orthophosphate (TSP) | $PO_4$≡ as polyphosphate (TKPP) | HEDP | TTA | AA/ HPA* | TT** | Corrosion rate (mpy) LCS*** (μm in brackets) | % Inhibition |
|---|---|---|---|---|---|---|---|---|---|---|---|---|
| 1 | 400 | 200 | 284 | 192 | 0 | 0 | 0 | 0 | 0 | 0 | 143.5 (3645) | 0 |
| 2 | 400 | 200 | 284 | 192 | 21.6 | 10.8 | 4.32 | 5.4 | 0 | 42.12 | 1.0 (25.4) | 99.3 |
| 3 | 400 | 200 | 284 | 192 | 0 | 0 | 0 | 0 | 11.25 | 11.25 | 82.3 (2090) | 42.6 |
| 4 | 400 | 200 | 284 | 192 | 12.0 | 6.0 | 2.40 | 3.0 | 5.0 | 28.40 | 0.6 (15.2) | 99.6 |
| 5 | 600 | 300 | 426 | 288 | 0 | 0 | 0 | 0 | 0 | 0 | 90.3 (2294) | 0 |
| 6 | 600 | 300 | 426 | 288 | 31.2 | 15.6 | 6.24 | 7.8 | 0 | 60.84 | 0.3 (7.6) | 99.7 |
| 7 | 600 | 300 | 426 | 288 | 12.0 | 6.0 | 2.40 | 3 | 10.0 | 33.40 | 0.3 (7.6) | 99.7 |
| 8 | 600 | 300 | 426 | 288 | 0 | 0 | 0 | 0 | 16.25 | 16.25 | 56.0 (1422) | 38.0 |
| 9 | 600 | 300 | 426 | 288 | 33.2 | 16.6 | 6.64 | 9.9 | 0 | 66.34 | 0.7 (17.8) | 99.2 |
| 10 | 600 | 300 | 426 | 288 | 15.0 | 7.5 | 3.00 | 4.5 | 10 | 40.00 | 0 (0) | 100.0 |
| 11 | 600 | 300 | 426 | 288 | 0 | 0 | 0 | 0 | 18.25 | 18.25 | 70.0 (1778) | 22.5 |

*3AA:1HPA: molecular weight 6,000 **Total Treatment in ppm ***Low Carbon Steel

It is evident from the results of the testing that treatments including the polymer were more, or at least as, effective as lower dosages than those which did not use the polymer.

Additional studies were conducted to establish the effectiveness of one of the treatments of the invention under various conditions. The test procedure utilized is referred to as a recirculation test which is disclosed in U.S. 3,960,576. The conditions of testing and the results with regard to certain metallurgies are set forth in the following Table V. As will be apparent, corrosion rate, corrosion type, and deposition, if any, are noted for both coupons and tubing used.

TABLE V
AA/HPA Concentration versus calcium hardness

| Test No. | Treatment, conc. in ppm | | | | |
|---|---|---|---|---|---|
| | AA/HPA* ppm actives | TSP as O—$PO_4$ | TKPP as $PO_4$ | HEDP | BZT |
| 1 | 5.0 | 12 | 6.0 | 2.4 | 2 |
| 2 | 5.0 | 15 | 3.5 | 2.4 | 2 |
| 3 | 7.5 | 15 | 3.5 | 2.4 | 2 |
| 4 | 7.5 | 12 | 6.0 | 2.4 | 2 |
| 5 | 10.0 | 12 | 6.0 | 2.4 | 2 |
| 6 | 5.0 | 12 | 6.0 | 2.4 | 2 |
| 7 | 10.0 | 12 | 6.0 | 2.4 | 2 |
| 8 | 5.0 | 6 | 3.0 | 1.2 | 1 |
| 9 | 15.0 | 9 | 4.5 | 1.8 | 1.5 |

TABLE V (Contd.)
AA/HPA Concentration versus calcium hardness (contd.)

| Test No. | Water chemistry | | | | | | |
|---|---|---|---|---|---|---|---|
| | pH | Ca as $CaCO_3$ | Mg as $CaCO_3$ | $SO_4$ | Cl | M Alk as $CaCO_3$ | Conductivity in micro-mhos |
| 1 | 7.0 | 80 | 40 | 40 | 56 | 0 | |
| 2 | 7.0 | 170 | 110 | 110 | 119 | 0 | |
| 3 | 6.5 | 400 | 200 | 200 | 280 | 20 | |
| 4 | 7.4 | 400 | 200 | 200 | 280 | 32 | |
| 5 | 7.3 | 600 | 300 | 400 | 420 | 26 | 2100 |
| 6 | 7.0 | 900 | 450 | 450 | 630 | 0 | |
| 7 | 7.0 | 800 | 400 | 400 | 560 | 0 | 2400 |
| 8 | 7.0 | 800 | 400 | 400 | 560 | 0 | |
| 9 | 7.0 | 800 | 400 | 400 | 560 | 0 | |

TABLE V (Contd.)
AA/HPA Concentration versus calcium hardness (contd.)

| Test No. | Corrosion rate (mpy) (µm in brackets) | | | Deposition | | | |
|---|---|---|---|---|---|---|---|
| | | | | Coupons | | Dep. tube | |
| | LCS | PtLCS | ADM | LCS | PtLCS | LCS | PtLCS |
| 1 | 2.0 (50.8) | 0 (0) | 0 (0) | None | | | |
| 2 | 1.3 (33.0) | 0.5 (12.7) | 0 (0) | None | | | |
| 3 | 4.0 (102) | 0 (0) | 1.2 (90.5) | Very slight film | | | |
| 4 | 0.8 (20.3) | 0 (0) | 0.3 (7.6) | Film | None | Thin Film | Thin Film |
| 5 | 0.6 (15.2) | 0.2 (5.1) | 0 (0) | Sl loc | None | None | None |
| 6 | 1.0 (25.4) | 0.7 (17.8) | 0.8 (20.3) | Film | | | |
| 7 | 0.8 (20.3) | 1.5 (38.1) | 1.5 (38.1) | Thin Film | None | Film | Thin Film |
| 8 | 1.5 (38.1) | — | 0 (0) | Thk Film | None | Thk Film | None |
| 9 | 0 (0) | — | 0 (0) | None | | | |

TABLE V (Contd.)
AA/HPA Concentration versus calcium hardness (contd.)
Corrosion type

| Test No. | Coupons LCS | Coupons PtLCS | Dep. tube LCS | Dep. tube PtLCS | Days run |
|---|---|---|---|---|---|
| 1 | General | | | | 4 |
| 2 | General | | | | 6 |
| 3 | General | | | | 7 |
| 4 | General | | | | 7 |
| 5 | General | | | | 7 |
| 6 | General | | | | 5 |
| 7 | General | | | | 4 |
| 8 | Gen | Gen | Loc | Loc | 2 |
| 9 | General | | | | 4 |

LCS=Low Carbon Steel
PtLCS=Pretreated Low Carbon Steel
ADM=Admiralty
*AA/HPA=3:1: molecular weight about 6,000
BZT=Benzotriazole
GEN=General Corrosion
Loc=Localized Corrosion/Deposition
Thk=Thick
Sl=Slight

Conditions:
Bulk Water Temperature=120°F (48.9°C)
Heat Flux=8000 BTU/Ft$^2$/hr (9079 joules/cm$^2$)
Water Velocity=2 ft/sec (0.61 meters/sec) (coupons)
3 ft/sec (0.91 meters/sec) (deposition tube)
Make-up Rate=one system volume/day
Recirculating System

It is clear that the inventive treatment provides superb corrosion control with little or no attendent deposition problems.

Comparative tests

A series of recirculating, heat transfer corrosion studies were conducted to demonstrate the unique and unexpected behaviour of the orthophosphate-based corrosion programs of the invention. The corrosion treatments evaluated compare the performance of the conventional phosphate-based corrosion programs patented by Gaupp in U.S. Patent 3,992,318 and Hollingshad in U.S. Patent 3,941,562 with the programs claimed in the present application. Table VI summarizes the compositions of the treatments evaluated. A summary of the corrosion results of these studies is presented in Table VII. The experimental procedure and test conditions can be found in the Experimental Section hereunder.

Studies conducted with Treatments D and E compared the performance of the most effective Gaupp formulation (Col. 7, Composition I) with an identical formulation in which an acrylic acid/2-hydroxypropylacrylate copolymer (AA/HPA) was substituted for polyacrylic acid (PAA). As evident from Table VII the performance of these two programs is very similar with regard to corrosion protection and deposition. Both treatments provided corrosion protection through the formation of a barrier film and suffered from localized, under deposit corrosion. Substituting AA/HPA (a known calcium phosphate deposit control agent) for PAA did not provide any significant reduction in fouling or improved corrosion protection.

Studies A, B and C compared the performance of the Gaupp formulation, in which high levels of PAA and AA/HPA were employed (Treatments A and B) with that of an orthophosphate-based composition

claimed in the present application (Treatment C). The corrosion control obtained with Treatment C is clearly superior to that obtained with Treatments A and B. Additionally, Treatment C provided excellent corrosion protection without relying on the formation of a barrier film. A comparison of the corrosion rates obtained with Treatments A and B to those obtained with Treatments D and E demonstrates that corrosion protection comparable to Treatment C cannot be obtained by increasing either the PAA or AA/HPA concentration in the Gaupp formulation. In fact, a reduction in corrosion protection occurs with the Gaupp formulations when the polymer concentration is increased from 1.7 ppm (Treatments D and E) to 7.5 ppm (Treatments A and B).

Treatments F and G compared the performance of a polyacrylic acid-orthophosphate composition disclosed by Hollingshad with that of an AA/HPA-orthophosphate composition disclosed in the above-identified application. As can be seen from Table VII, the Hollingshad polyacrylic acid-orthophosphate formulation (Treatment F) provides corrosion protection through the formation of a calcium phosphate barrier film and suffers from the inability to prevent localized deposition and subsequent under deposit corrosion, a common problem with this type treatment. The AA/HPA-orthophosphate treatment (Treatment C) is clearly superior in that it gives lower corrosion rates and does not rely on the formation of a calcium phosphate barrier film. The ability to inhibit steel corrosion with an orthophosphate-based treatment that does not rely on a barrier film to provide corrosion protection was previously unattainable and therefore represents unique and unexpected behaviour.

A comparison of the performance of Treatments C and H illustrates the similarities between the orthophosphate-based program claimed in the present application (Treatment C) and chromate (Treatment H). Both treatments give nearly identical corrosion rates without formation of a barrier film.

In order to illustrate the enhanced results achievable with a treatment using the AA/HPA, an orthophosphate, and a polyphosphate as compared with an identical treatment without the polyphosphate, i.e. the equivalent polymer and $PO_4^{\equiv}$, additional studies were conducted. These treatments are designated as I through L and are specifically described in Table VI. It is evident from the results set forth in Table VII that when even a small proportion of the orthophosphate is replaced with polyphosphate, the overall benefits are obtained in the way of corrosion rate and deposit as compared with Treatment G. In addition, when all of the orthophosphate is replaced by polyphosphate, a totally different result is achieved. Tubes and coupons were significantly corroded with an undesirable amount of deposition. These data clearly establish the unexpected results obtainable using the three-component system over the two.

TABLE VI—Corrosion compositions evaluated

| Treatment | Composition | ppm | (ppm as $PO_4^{-3}$) |
|---|---|---|---|
| A | Sodium hexametaphosphate | 16.8 | (15.3) |
| | Nitrilo tri-methylenephosphonic acid | 6.7 | (3.2) |
| | Acrylic acid/2-hydroxypropylacrylic acid copolymer(1) | 7.5 | (0.0) |
| B | Sodium hexametaphosphate | 16.8 | (15.3) |
| | Nitrilo tri-methylenephosphonic acid | 6.7 | (3.2) |
| | Polyacrylic acid(2) | 7.5 | (0.0) |
| C | Trisodium phosphate, hydrated | 40.0 | (12.0) |
| | Tetrapotassium pyrophosphate | 10.6 | (6.0) |
| | 1-Hydroxy ethylidene disphosphonic acid | 2.4 | (2.2) |
| | Tolyltriazole | 3.0 | (0.0) |
| | Acrylic acid/2-hydroxypropylacrylate copolymer | 7.5 | (0.0) |
| D | Sodium hexametaphosphate | 16.8 | (15.3) |
| | Nitrilo tri-methylenephosphonic acid | 6.7 | (3.2) |
| | Acrylic acid/2-hydroxypropylacrylate copolymer(1) | 1.7 | (0.0) |
| E | Sodium hexametaphosphate | 16.8 | (15.3) |
| | Nitrilo tri-methylenephosphonic acid | 6.7 | (3.2) |
| | Polyacrylic acid(2) | 1.7 | (0.0) |
| | (Gaupp, U.S. 3,992,318, col. 7, Composition I) | | |
| F | Trisodium phosphate, hydrated | 80.0 | (20.0) |
| | Polyacrylic acid(3) | 40.0 | (0.0) |
| G | Trisodium phosphate, hydrated | 80.0 | (20.0) |
| | Acrylic acid/2-hydroxypropylacrylate copolymer(1) | 40.0 | (0.0) |
| | (ratio of polymer to $PO_4\equiv$ 2:1) | | |
| H | Sodium dichromate, dihydrate | 20 ppm as $CrO_4^{-2}$ | |
| I | Acrylic acid/2-hydroxypropylacrylic acid copolymer(1) | 40.0 | (0.0) |
| | Tetrapotassium pyrophosphate | 8.8 | (5.0) |
| | Trisodium phosphate, hydrated | 60.0 | (15.0) |
| J | Acrylic acid/2-hydroxypropylacrylic acid copolymer(1) | 40.0 | (0.0) |
| | Tetrapotassium pyrophosphate | 17.6 | (10.0) |
| | Trisodium phosphate, hydrated | 40.0 | (10.0) |
| K | Acrylic acid/2-hydroxypropylacrylic acid copolymer(1) | 40.0 | (0.0) |
| | Tetrapotassium pyrophosphate | 26.4 | (15.0) |
| | Trisodium phosphate | 20.0 | (5.0) |
| L | Acrylic acid/2-hydroxypropylacrylic acid copolymer(1) | 40.0 | (0.0) |
| | Sodium hexametaphosphate | 22.0 | (20.0) |

(1) Acrylic acid/2-hydroxypropylacrylate copolymer (AA/HPA) having an AA:HPA mole ratio of 3:1 and a molecular weight=6,000

(2) Polyacrylic acid (PAA) having a molecular weight=5,000

(3) Polyacrylic acid having a molecular weight=1,800, ratio of polymer to $PO_4$=2:1.

TABLE VII—Summary of corrosion data

| Treatment | Total phosphate conc. of treatment, ppm $PO_4^{-3}$ | Corrosion rate in mpy | Observations |
|---|---|---|---|
| A | 18.5 | 8.3 | Coupons and heat exchanger tube are covered with a calcium phosphate film. Severe localized corrosion evident on coupons and heat exchanger tube. |
| B | 18.5 | 62.8 | Coupons and heat exchanger tube are severely corroded and fouled with thick deposits. Localized corrosion on coupons and heat exchanger tube is severe. |
| C | 20.2 | 2.5 | No deposition or localized corrosion evident on coupons or heat exchanger tube. |
| D | 18.5 | 6.8 | Coupons and heat exchanger tube are covered with calcium phosphate film. Localized corrosion is evident on coupons and heat exchanger tube. |
| E[1] | 18.5 | 5.2 | Same as D above. |
| F | 20.0 | 15.8 | Thin uniform calcium phosphate film on coupons and heat exchanger tube. Severe localized corrosion evident on heat exchanger tube and coupons. |
| G | 20.0 | 6.2 | Heat exchanger tube and coupons are free of deposits and corrosion. |
| H | 0.0 | 2.2 | Only slight localized corrosion on coupons. |
| I | 20.0 | 5.8 | Very mild amount of localized corrosion on coupons and heat exchanger tube. Coupons developed a multi-colored passivated metal oxide film. No deposition. |
| J | 20.0 | 4.0 | Very light multi-colored passivated film with superficial mild localized corrosion. No deposition observed. |
| K | 20.0 | 3.0 | Coupons and tube have a very light multi-coloured passivated film. Almost no localized corrosion and no deposition. |
| L | 20.0 | 21.0 | Severe localized attack together with a significant amount of deposition. |

[1] Gaupp, U.S. Patent 3,992,318, Composition I at 25 ppm active solids.

The above comparisons were made between the treatments of the Gaupp invention, the Gaupp invention substituting a polymer of Godlewski et al US—A—4,029,577), the treatments of Hollingshad, and the treatment in accordance with the present invention.

Certain conditions such as pH and flow rates had to be assumed since Gaupp was silent as to these parameters and copper ion was eliminated from the test water since this ion is seldom encountered in a water supply except as a by-product of the corrosion of the copper parts of a system. It was felt that using the Gaupp technique would be most effective as it closely resembles the techniques used by Applicants. Hollingshad on the other hand uses a procedure which is inadequate for the purposes of the present invention. The technique utilized therein is merely a cursory, screening type procedure. The test conditions and techniques of Gaupp are more representative of the system where the treatments would ultimately find their use.

The parameters of the tests conducted, the compositions used, the ultimate results as to corrosion protection, and deposit formation, if any, are shown in the Tables VI and VII. The frame of comparison is treatment "H", which was tested in accordance with the techniques using sodium bichromate as the inhibitor. This treatment clearly indicates the type passivated metal oxide which is the objective if over-all performance is to be obtained.

A review of the tests clearly indicates that the only treatments which duplicate the chromate treatment are C and G, both of which were treatments in accordance with the present invention. It is apparent from comparing treatments D and E with A and B that while substituting the polymer of Godlewski et al did provide protection, it was by a totally different means of providing a barrier layer.

Experimental section

Procedure

All laboratory corrosion studies were conducted in a recirculating system which is designed to provide a realistic measure of the ability of a treatment to prevent corrosion and fouling under heat transfer conditions. In this system treated water is circulated by a centrifugal pump through a corrosion coupon by-pass into which corrosion coupons are inserted, and past a non-pretreated mild steel (AISI-1010) heat exchanger tube container in a plexiglass block. The inside of the exchanger tube is filled with silicone oil and heated with an electric heater. The internal temperature of the silicone oil is controllable. The water velocity past the corrosion coupons and heat exchanger tube is equivalent at any given flow rate (gallons per minute) and can be controlled anywhere from 0 to 4.5 ft/sec. (0 to 1.37 meters/sec.).

The pH and temperature of the bulk water are automatically controlled. The treated water is prepared by chemical addition to deionized water. Provisions for continuous make-up and blowdown are made by pumping fresh treated water from supply tanks to the sump, with overflow from the sump serving as blowdown.

Corrosion rates are determined by exposing precleaned and weighed metal specimens for a specified period of time, after which they are removed, cleaned and reweighed. Corrosion rates are calculated by dividing the total coupon weight loss by the number of days of exposure.

Test parameters

A. Water Chemistry

| Constituent | as | ppm |
|---|---|---|
| Calcium | $CaCO_3$ | 300 |
| Magnesium | $CaCO_3$ | 100 |
| Chloride | $Cl^-$ | 500 |
| Sulfate | $SO_4^{-2}$ | 500 |
| Iron | Fe | 0.5 |
| Total Alkalinity | $CaCO_3$ | 30 |
| pH | — | 7.2±0.2 |

B. Test Duration: 3 days

C. Metallurgy:

a) AISI-1010 non-pretreated corrosion coupons

b) AISI-1010 non-pretreated heat exchanger tube

D. Water Velocity: 3 ft/sec. (0.91 meters/sec.)

E. Bulk Water Temperature: 122°±2°F (50°±1.1°C)

F. Silicone Oil Temperature: 350°F (176.7°C)

G. Makeup (Blowdown) Rate: One system volume (11 l/day)

Additional studies were conducted to illustrate

(i) that distinctly different and more beneficial results are obtained when an acrylic acid/hydroxypropylacrylate copolymer (AA/HPA) is utilized in conjunction with an orthophosphate compound as compared with those results obtainable when the identical polymer is utilized in conjunction with a polyphosphate or a phosphonate when $PO_4$≡ concentrations are equivalent;
(ii) that in addition superior results are obtained when the copolymer is used in conjunction with a combination of orthophosphate, polyphosphate and phosphonate as compared with each used individually with the copolymer when the $PO_4$≡ concentration remains constant; and
(iii) that there is no performance advantage in using AA/HPA in place of polyacrylic acid (PAA) with polyphosphate alone;

In order to illustrate the unexpected activity of the combinations as encompassed by the present invention, the particular formulations of treatments together with the results are recorded in Tables VIII and IX respectively for all of the treatments which were tested to illustrate the unexpected activity.

It will be seen that the information relative to Treatments C, G and L was taken from Tables VI and VII above. While Treatments C and M are similar ingredient-wise, it should be noted that the AA/HPA concentration in C is much lower (7.5 ppm) as compared with the concentration in M (40 ppm), indicating that the invention is quite effective over a wide range of copolymer concentration.

The results clearly indicate that on comparable treatment dosages at constant copolymer and $PO_4$≡ concentrations:

(i) the combination of the copolymer with an orthophosphate (Treatment G) is clearly and unexpectedly superior as compared with the identical copolymer utilized respectively with either a polyphosphate (Treatment L), a phosphonate (Treatment N), or tolyltriazole (Treatment O);
(ii) the combination of polyphosphate, and orthophosphate and the copolymer (Treatments I, J & K of Tables VI and VII) is significantly and unexpectedly more effective than the orthophosphate or the polyphosphate (Treatments G and L respectively) used alone with the copolymer;
(iii) the combination of the orthophosphate, the polyphosphate and the phosphonate with the copolymer (Treatments C and M) provides vastly superior corrosion protection when compared with combinations of the copolymer with the orthophosphate and polyphosphate or with the individual ingredients alone; and
(iv) the combination of copolymer and polyphosphate alone (Treatment P) offers no significant advantage over a combination of PAA and polyphosphate;

If one carefully observes the operating criteria of the invention, not only is exceptional corrosion protection obtainable, but also the protection is obtained without any significant deposition (please note the comments in Table IX).

The lack of deposition is very important since it permits, for example in a cooling water operation, virtually unimpeded flow of the cooling medium with high heat transfer capabilities, prompting a significant cost advantage because of greater efficiency at lower and less expensive energy requirements.

TABLE VIII—Corrosion compositions evaluated

| Treatment | Composition | ppm | (ppm as $PO_4^{-3}$) |
|---|---|---|---|
| C | Trisodium phosphate, hydrated | 48.0 | (12.0) |
| | Tetrapotassium pyrophosphate | 10.6 | (6.0) |
| | 1-Hydroxy ethylidene diphosphonic acid | 2.4 | (2.2) |
| | Tolyltriazole | 3.0 | (0.0) |
| | Acrylic acid/2-hydroxypropylacrylate copolymer | 7.5 | (0.0) |
| G | Trisodium phosphate, hydrated | 80.0 | (20.0) |
| | Acrylic acid/2-hydroxypropylacrylate copolymer(1) (ratio of polymer to $PO_4$=2:1) | 40.0 | (0.0) |
| L | Acrylic acid/2-hydroxypropylacrylic acid copolymer(1) | 40.0 | (0.0) |
| | Sodium hexametaphosphate | 22.0 | (20.0) |
| M | Acrylic acid/2-hydroxypropylacrylic acid copolymer(1) | 40.0 | (0.0) |
| | Tetrapotassium pyrophosphate | 10.6 | (6.0) |
| | Trisodium phosphate, hydrated | 48.0 | (12.0) |
| | 1-Hydroxy ethylidene diphosphonic acid | 2.4 | (2.2) |
| N | 1-Hydroxy ethylidene diphosphonic acid | 21.7 | (20.0) |
| | Acrylic acid/2-hydroxypropylacrylate copolymer(1) | 1.7 | (0.0) |
| O | Acrylic acid/2-hydroxypropylacrylic acid copolymer(1) | 40.0 | (0.0) |
| | Tolyltriazole | 3.0 | (0.0) |
| P | Sodium hexametaphosphate | 22.0 | (20.0) |
| | Polyacrylic acid(2) | 40.0 | (0.0) |

(1) Acrylic acid/2-hydroxypropylacrylate copolymer (AA/HPA) having an AA:HPA mole ratio of 3:1 and a molecular weight=6,000

(2) Polyacrylic acid having a molecular weight=1,800, ratio of polymer to $PO_4$=2:1

TABLE IX—Summary of corrosion data

| Treatment | Total phosphate conc. of treatment, ppm $PO_4^{-3}$ | Corrosion rate in mpy (μm in brackets) | Observations |
|---|---|---|---|
| C | 20.2 | 2.5 (63.5) | No deposition or localized corrosion evident on coupons or heat exchanger tube. |
| G | 20.0 | 6.2 (157) | Heat exchanger tube and coupons are free of deposits and corrosion. |
| L | 20.0 | 21.0 (533) | Severe localized attack together with a significant amount of deposition. |
| M | 20.2 | 1.7 (43.2) | Very mild amount of localized corrosion on coupons and heat exchanger tube. Coupons developed a multi-coloured passivated metal oxide film. No deposition. |
| N | 20.0 | 59.0 (1499) | Severe corrosion on coupons and heat exchanger tubes. Coupons and heat exchanger tubes heavily covered with deposit. |
| O | 0.0 | 146.0 (3708) | Severe corrosion on coupons and heat exchanger tubes. Coupons and heat exchanger tubes heavily covered with deposit. |
| P | 20.0 | 9.7 (246) | Coupons and heat exchanger tube are covered with calcium phosphate film. Localized corrosion is evident on coupons and heat exchanger tube. |

The results shown in Table IX illustrate the unexpected improvement obtained using the present invention in contrast to that of US—A—4,209,398, which does not suggest that if one chooses a particular combination of polymer and phosphate from the vast number of possibilities set forth in its specification that exceptional corrosion protection is obtained in accordance with the criteria of the present invention. The unexpected effectiveness of the present invention is evident from the corrosion data in the Table. Little or no deposition occurs, contrary to the results of US—A—4,209,398. It should also be pointed out that the testing conditions employed in the Table are much more severe than those utilized in the testing procedure of US—A—4,209,398 and accordingly are a better representation of actual commercial conditions generally encountered.

Thus US—A—4,209,398 offers a vast number of choices without any indication of the superior results achievable utilizing a specific combination of polymer and phosphates.

Field studies

Actual testing of the inventive concept was conducted at various industrial sites under production operating conditions. These case studies are detailed below.

Case study No. 1

A midwestern petrochemical plant was using a conventional phosphate/dispersant program in their open recirculating cooling system to control corrosion. With the phosphate/dispersant treatment (applied at a concentration that would give 3 ppm orthophosphate in the recirculating water), mild steel (AISI-1010) corrosion rates average 15 mpy (381 microns py) with severe pitting corrosion present, and fouling of heat transfer surfaces in process equipment was a chronic problem. The cooling system has a history of pH upsets and control problems which made corrosion and deposition control difficult. The cooling system operate at a recirculation rate of 15,000 gpm (56,780 litres per minute) with an 18°F (10°C) temperature drop across the cooling tower. Untreated well water was used as makeup to maintain the recirculating water at 2.5 cycles of concentration. Analysis of the recirculating water typically gave: 1230 ppm total hardness (as ppm $CaCO_3$), 740 ppm calcium hardness (as ppm $CaCO_3$), 40 ppm methyl orange alkalinity (as ppm $CaCO_3$), 34 ppm silica (as ppm, $SiO_2$) and 2360 micromhos conductivity.

Application of a composition of this invention applied at a concentration that would give 15 ppm AA/HPA polymer at 10 to 15 ppm orthophosphate was made to the cooling system, with the pH being controlled at 7. Over an 8-month period, mild steel corrosion rates were 1.9 mpy (48.3 μm py) without any significant pitting corrosion present. Additionally, no fouling problems were incurred with process

equipment. Monitoring heat transfer coefficients (U) of a process exchanger indicated fouling had subsided after the application of the AA/HPA—phosphate treatment.

In this case study the actual treatment concentrations were:

10.2 ppm O—$PO_4^{\equiv}$; 5.1 pyrophosphate; 2 ppm hydroxyethylidene diphosphonic acid; and 1.7 ppm benzotriazole (BZT).

15 ppm AA/HPA (3:1; molecular weight about 6,000).

Case study No. 2

A west coast facility, operating an open recirculating cooling system with calcium hardness levels typically below 100 ppm (as ppm $CaCO_3$) in the recirculating water, had always found it necessary to supplement its phosphate/dispersant treatment with zinc, to control mild steel corrosion. The addition of zinc was necessary because the phosphate/dispersant treatment alone was unable to establish an adequate diffusion barrier film in the low hardness water. Mild steel corrosion rates were as high as 9 mpy (229 µm py), with pitting corrosion occasionally a problem. The cooling system operated at a recirculation rate of 15,000 gpm (56,780 litres per minute) with an 8°F (4.4°C) temperature drop across the tower. River water was used as makeup to maintain the recirculating water at 1.5 cycles of concentration.

Application of a composition of this invention (applied at a concentration that would give 5 ppm AA/HPA polymer and 12 to 16 ppm orthophosphate in the recirculating water) eliminated the pitting corrosion and reduced mild steel corrosion rates to 1.4 mpy (35.6 µm py), without incurring any fouling problems.

The actual concentrations applied in this case study were:

12 ppm O—$PO_4^{\equiv}$; 6 ppm tetrapotassium pyrophosphate; 2.4 ppm hydroxyethylidene diphosphonic acid; and 2 ppm benzotriazole.

5 ppm AA/HPA (3:1, molecular weight about 6,000).

In summary then, the laboratory data and the field studies clearly indicate the advancement provided by the treatments of the present invention.

**Claims**

1. A composition for providing a protective passive oxide film on the surface of a ferrous metallic part in contact with an aqueous solution with little or no attendant deposition of scale on said part, which comprises

(a) a water-soluble polymer comprising units derived from an acrylic acid or water-soluble salt thereof and units of an hydroxylated lower alkyl acrylate, wherein the units of the polymer having the following formulae:—

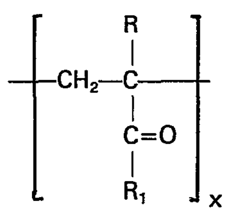

and

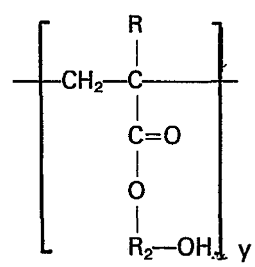

wherein R is hydrogen or a lower alkyl of from 1 to 3 carbon atoms; $R_1$ is OH, OM or $NH_2$ where M is a water-soluble cation; $R_2$ is a lower alkylene of from 2 to 6 carbon atoms and the mole ratio of x:y is 36:1 to 1:4; and

(b) a water-soluble orthophosphate compound, the ratio on a weight basis of the polymer to the orthophosphate expressed as $PO_4^{\equiv}$ being from 1:8 to 4:1, the composition being zinc-free.

2. A composition as claimed in claim 1, wherein the weight ratio of said polymer to said orthophosphate expressed as $PO_4^{\equiv}$ is from 1:6 to 2:1.

3. A composition as claimed in any one of claims 1 and 2 which additionally contains a water-soluble organo phosphonic acid compound or a water-soluble salt thereof.

4. A composition as claimed in claim 3, wherein the weight ratio of said orthophosphate to said phosphonic acid or salt, both expressed as $PO_4^{\equiv}$, is from 1:2 to 13:1.

5. A composition as claimed in claim 4, wherein said ratio is from 2:1 to 8:1.

6. A composition as claimed in any one of claims 1 to 5, wherein in the formulae R is hydrogen and $R_2$ is a lower alkylene of 3 carbon atoms.

7. A composition as claimed in any one of claims 1 to 6 which also contains

(c) a water-soluble polyphosphate compound.

8. A composition as claimed in claim 7, wherein the weight ratio of said orthophosphate to polyphosphate, both expressed as $PO_4^{\equiv}$, is from 15:1 to 1:3.

9. A composition as claimed in claim 8 wherein said ratio is 2.5:1 to 1:1.

10. A composition as claimed in any one of claims 1 to 9, which also contains at least one copper corrosion inhibitor.

11. A composition as claimed in claim 10, wherein the copper corrosion inhibitor is selected from tolyltriazole, benzotriazole, and benzothiazole compounds.

12. A composition as claimed in any one of claims 1 to 11, wherein the hydroxy alkyl acrylate is hydroxy propyl acrylate.

13. A composition as claimed in claim 12, wherein the ratio of the acrylic acid units to said hydroxy propyl acrylate units is 3:1 and the polymer has a molecular weight of 6,000.

14. A composition as claimed in claim 12 or 13 wherein said organo phosphonic acid compound or salt is hydroxy-ethylidene diphosphonic acid or a water-soluble salt thereof respectively.

15. A method of inhibiting the corrosion of ferrous metal parts in contact with a zinc-free aqueous solution with little or no attendant deposition of scale on said ferrous parts, which corrosion inhibition is obtained by providing for the formation of a protective passive oxide film on the metal surface in contact with said aqueous medium, which method comprises:—

(i) assuring that the pH of said aqueous medium is 5.5 or above;
(ii) assuring that in the aqueous medium the concentration of calcium or other ions selected from nickel and chromium and mixtures thereof is at least 15 parts per million parts of water; and
(iii) adding to said aqueous medium a composition as claimed in any one of claims 1 to 14 or the components of said composition in stepwise addition in an amount or amounts sufficient to provide a substantially scale free protective passive oxide film on the metallic surface.

16. A method as claimed in claim 15, wherein the orthophosphate (expressed as $PO_4\equiv$) is added to said aqueous medium in an amount of 6 to 30 parts per million parts of water and said polymer is added in an amount of from 3 to 25 parts per million parts of water.

17. A method as claimed in claim 16, wherein the pH is maintained or adjusted within the range of 6.5 to 9.5.

18. A method as claimed in claim 16, wherein the organo phosphonic acid compound or salt thereof expressed as $PO_4\equiv$ is added to said aqueous medium in an amount of 1 to 6 parts per million parts of water.

19. A method as claimed in any one of claims 15 to 18, wherein the polyphosphate expressed as $PO_4\equiv$ is added to the aqueous medium in an amount of 3 to 10 parts per million parts of water.

20. A method as claimed in any one of claims 15 to 19, wherein the aqueous medium is contained in a cooling water system.

**Patentansprüche**

1. Mittel zur Bildung einer Schutzschicht eines passiven Oxids auf der Oberfläche von Eisenmetallteilen in Berührung mit einer wäßrigen Lösung zur Verhinderung oder weitestgehenden Verringerung der Ansatzbildung enthaltend

a) ein wasserlösliches Polymeres aus Einheiten abgeleitet von einer Acrylsäure oder deren wasserlöslichen Salz und Einheiten eines hydroxylgruppenhaltigen mit niederen Alkylgruppen substituierten Acrylats, wobei die Einheiten folgenden Formeln entsprechen

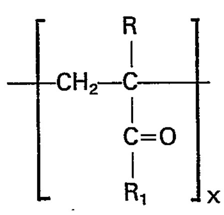

nd

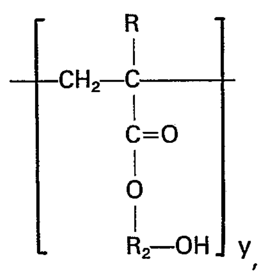

worin R ein Wasserstoffatom oder eine niedere Alkylgruppe mit 1 bis 3 Kohlenstoffatomen; $R_1$ eine OH, OM oder $NH_2$— Gruppe ist, in welcher M ein wasserlösliches Kation bedeutet; $R_2$ eine niedere Alkylengruppe mit 2 bis 6 Kohlenstoffatomen ist und das Molverhältnis x:y 36:1 bis 1:4 beträgt und

b) ein wasserlösliches Orthophosphat, wobei das Gewichtsverhältnis Polymer zu Orthophosphat—als $PO_4\equiv$—1:8 bis 4:1 beträgt und das Mittel zinkfrei ist.

2. Mittel nach Anspruch 1, worin das Gewichtsverhältnis Polymer zu Orthophosphat-als $PO_4\equiv$—1:6 bis 2:1 beträgt.

3. Mittel nach Anspruch 1 oder 2, wobei es zusätzlich eine wasserlösliche organische Phosphonsäure oder deren wasserlösliches Salz enthält.

4. Mittel nach Anspruch 3, worin das Gewichtsverhältnis von Orthophosphat zu Phosphonsäure oder deren Salz—jeweils als $PO_4\equiv$—1:2 bis 13:1 beträgt.

5. Mittel nach Anspruch 4, worin das Verhältnis 2:1 bis 8:1 beträgt.

6. Mittel nach einem der Ansprüche 1 bis 5, worin in den Formeln R ein Wasserstoffatom und $R_2$ eine niedere Alkylengruppe mit 3 Kohlenstoffatomen ist.

7. Mittel nach einem der Ansprüche 1 bis 6 enthaltend zusätzlich

c) ein wasserlösliches Polyphosphat.

8. Mittel nach Anspruch 7, worin das Gewichtsverhältnis Orthophosphat zu Polyphosphat—jeweils als $PO_4{\equiv}$—15:1 bis 1:3 beträgt.

9. Mittel nach Anspruch 8, worin das Verhältnis 2,5:1 bis 1:1 beträgt.

10. Mittel nach einem der Ansprüche 1 bis 9 enthaltend zumindest einen Kupfer-Korrosionsinhibitor.

11. Mittel nach Anspruch 10, worin der Kupfer-Korrosionsinhibitor eine Tolytriazol-, Benzotriazol- oder Benzothiazolverbindung ist.

12. Mittel nach einem der Ansprüche 1 bis 11, worin das Hydroxyalkylacrylat Hydroxypropylacrylat ist.

13. Mittel nach Anspruch 12, worin das Verhältnis Acrylsäureeinheiten zu Hydroxypropylacrylateinheiten 3:1 beträgt und das Polymere ein Molekulargewicht von 6000 hat.

14. Mittel nach Anspruch 12 oder 14, worin die Organophosphonsäure oder deren Salz Hydroxyethylidendiphosphonsäure oder deren Salz ist.

15. Verfahren zur Verhinderung der Korrosion von Eisenmetallteilen in Berührung mit einer zinkfreien wäßrigen Lösung mit geringer oder keiner Ansatzbildung auf den Eisenmetallteilen, wobei man den Korrosionsschutz erhält, indem auf der Metallfläche, die mit dem wäßrigen Medium in Berührung steht, ein Schutzüberzug aus einem passiven Oxid gebildet wird, indem

i) gewährleistet wird, daß der pH-Wert des wäßrigen Mediums zumindest 5,5 beträgt;
ii) gewährleistet wird, daß im wäßrigen Medium die Konzentration an Calciumionen oder Nickel- und/oder Chromionen zumindest 15 ppm—bezogen auf Wasser—beträgt und
iii) man dem wäßrigen Medium ein Mittel nach einem der Ansprüche 1 bis 14 oder deren Komponenten schrittweise in Mengen zugibt, um einen im wesentlichen ansatzfreien Schutzüberzug aus passivem Oxid auf der Metallfläche zu bilden.

16. Verfahren nach Anspruch 15, wobei das Orthophosphat—als $PO_4{\equiv}$—dem wäßrigen Medium in einer Menge von 6 bis 30 ppm und das Polymere in einer Menge von 3 bis 25 ppm, bezogen auf Wasser, zugegeben wird.

17. Verfahren nach Anspruch 16, worin der pH-Wert auf 6,5 bis 9,5 gehalten oder eingestellt wird.

18. Verfahren nach Anspruch 16, worin die Organophosphonsäure oder deren Salz—als $PO_4{\equiv}$ in einer Menge von 1 bis 6 ppm, bezogen auf Wasser, dem wäßrigen Medium zugegeben wird.

19. Verfahren nach einem der Ansprüche 15 bis 18, worin das Polyphosphat—als $PO_4{\equiv}$—dem wäßrigen Medium in einer Menge von 3 bis 10 ppm, bezogen auf Wasser, zugegeben wird.

20. Verfahren nach einem der Ansprüche 15 bis 19, worin das wäßrige Medium ein Kühlwassersystem ist.

**Revendications**

1. Une composition pour former une pellicule protectrice d'oxyde passif à la surface d'une partie métallique ferreuse en contact avec une solution aqueuse, sans dépôt simultané d'incrustations ou tartre sur cette partie, ou avec peu d'un tel dépôt, composition qui comprend:

(a) un polymère hydrosoluble comprenant des motifs d'un acide acrylique ou d'un sel hydrosoluble de cet acide et des motifs d'un acrylate d'hydroxyalkyle inférieur, motifs qui ont les formules suivantes:

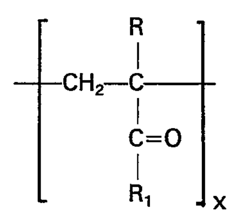

et

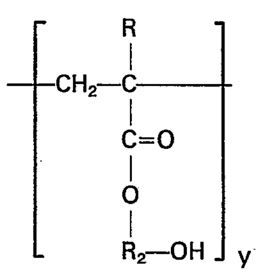

formules dans lesquelles R représente l'hydrogène ou un alkyle en $C_1$ à $C_3$; $R_1$ représente OH, OM ou $NH_2$, M étant un cation soluble dans l'eau; $R_2$ est un alkylène en $C_2$ à $C_6$ et la rapport molaire x:y est compris entre 36:1 et 1:4; et

(b) un composé orthophosphorique soluble dans l'eau, le rapport pondéral du polymère au composé orthophosphorique exprimé en $PO_4{\equiv}$ étant compris entre 1:8 et 4:1, et cette composition ne contenant pas de zinc.

2. Composition selon la revendication 1 dans laquelle le rapport pondéral du polymère à l'orthophosphate (en $PO_4{\equiv}$) est compris entre 1:6 et 2:1.

3. Composition selon la revendication 1 ou 2 qui contient en outre un composé d'acide organophosphonique soluble dans l'eau ou un sel hydrosoluble de cet acide.

4. Composition selon la revendication 3 dans laquelle le rapport pondéral de l'orthophosphate à l'acide phosphonique ou à son sel (les deux exprimés en $PO_4\equiv$) est compris entre 1:2 et 13:1.

5. Composition selon la revendication 4 dans laquelle ce rapport est compris entre 2:1 et 8:1.

6. Composition selon l'une quelconque des revendications 1 à 5 dans laquelle, dans les formules indiquées, R représente l'hydrogène et $R_2$ un alkylène à 3 atomes de carbone.

7. Composition selon l'une quelconque des revendications 1 à 6, qui contient également:
(c) un polyphosphate soluble dans l'eau.

8. Composition selon la revendication 7 dans laquelle le rapport pondéral de l'orthophosphate au polyphosphate (les deux exprimés en $PO_4\equiv$) est compris entre 15:1 et 1:3.

9. Composition selon la revendication 8 dans laquelle ce rapport est compris entre 2,5:1 et 1:1.

10. Composition selon l'une quelconque des revendications 1 à 9, qui contient également un ou plusieurs inhibiteurs contre la corrosion du cuivre.

11. Composition selon la revendication 10 dans laquelle l'inhibiteur contre la corrosion du cuivre est choisi parmi des composés tolyltriazoliques, benzotriazoliques et benzothiazoliques.

12. Composition selon l'une quelconque des revendications 1 à 11 dans laquelle l'acrylate d'hydroxyalkyle est l'acrylate d'hydroxy-propyle.

13. Composition selon la revendication 12 dans laquelle le rapport des motifs d'acide acrylique aux motifs de l'acrylate d'hydroxypropyle est le rapport 3 et le copolymère a une masse moléculaire de 6000.

14. Composition selon la revendication 12 ou 13 dans laquelle l'acide organophosphonique ou son sel est l'acide hydroxy-éthylidène diphosphonique ou un sel hydrosoluble de cet acide.

15. Une méthode d'inhibition de la corrosion de parties métalliques ferreuses qui sont en contact avec une solution aqueuse ne contenant pas de zinc, sans qu'il se produise en même temps un dépôt d'incrustations ou tartre sur ces parties ferreuses, ou avec seulement un faible dépôt, inhibition qui est obtenue par la formation d'une pellicule protectrice d'oxyde passif sur la surface du métal en contact avec le milieu aqueux, méthode dans laquelle:

(1) on s'assure que le pH du milieu aqueux est d'au moins 5,5, ou plus;
(2) on s'assure que la teneur du milieu aqueux en ions calcium, nickel ou chrome ou mélanges de ces ions est d'au moins 15 parties par million de parties d'eau; et
(3) on ajoute au milieu aqueux une composition selon l'invention ou bien les composants de cette composition par des additions séparées, dans une ou des proportions suffisantes pour former sur la surface métallique une pellicule protectrice d'oxyde passif, pratiquement sans incrustations.

16. Méthode selon la revendication 15 dans laquelle l'orthophosphate (exprimé en $PO_4\equiv$) est ajouté au milieu aqueux dans une proportion de 6 à 30 parties par million de parties d'eau, et le copolymère dans une proportion de 3 à 25 parties par million de parties d'eau.

17. Méthode selon la revendication 16 dans laquelle le pH est maintenu ou réglé entre 6,5 et 9,5.

18. Méthode selon la revendication 16 dans laquelle l'acide organophosphonique ou son sel (en $PO_4\equiv$) est ajouté au milieu aqueux dans une proportion de 1 à 6 parties par million de parties d'eau.

19. Méthode selon l'une quelconque des revendications 15 à 18 dans laquelle le polyphosphate (en $PO_4\equiv$) est ajouté au milieu aqueux dans une proportion de 3 à 10 parties par million de parties d'eau.

20. Méthode selon l'une quelconque des revendications 15 à 19 dans laquelle le milieu aqueux est celui d'un système d'eau de refroidissement.